# EUROPÄISCHE PATENTSCHRIFT

(11) **EP 2 153 077 B1**
(45) Veröffentlichungstag und Bekanntmachung des Hinweises auf die Patenterteilung: **16.11.2011**
(21) Anmeldenummer: 08734953.6
(22) Anmeldetag: 02.04.2008
(51) Int. Cl.: F16C 19/52, G01M 13/04

(54) **VORRICHTUNG ZUM ERKENNEN UND ÜBERWACHEN VON SCHÄDEN BEI WÄLZLAGERN**
DEVICE FOR DETECTING AND MONITORING DAMAGE TO ROLLING BEARINGS
DISPOSITIF DE DÉTECTION ET DE SURVEILLANCE DES DOMMAGES SUR DES PALIERS À ROULEMENT

(30) Priorität: 04.05.2007 DE 102007020938
(43) Veröffentlichungstag der Anmeldung: 17.02.2010
(73) Patentinhaber: Rothe Erde GmbH, 44137 Dortmund (DE)
(72) Erfinder: CLAUS, Wolfgang, 59510 Lippstadt (DE); WERTHER, Wolfgang, 59558 Lippstadt (DE)
(74) Vertreter: Dahlkamp, Heinrich-Leo
(86) Internationale Anmeldenummer: PCT/EP2008/002605
(87) Internationale Veröffentlichungsnummer: WO 2008/135123

(56) Entgegenhaltungen:
- EP-A- 0 529 354
- EP-A- 0 637 734
- WO-A-2006/083736
- US-A- 5 898 388

## Beschreibung

Die Erfindung betrifft eine Vorrichtung zum Erkennen und Überwachen von Schäden bei Wälzlagern nach dem Oberbegriff des Anspruchs 1.

Für verschiedene Einsatzfälle, insbesondere bei Großwälzlagern zum Einsatz im Offshore-Bereich, bei Kranen oder Bojen, ist es sinnvoll, Prüfvorrichtungen vorzusehen, die zerstörungsfrei und ohne Zerlegung des Lagers in der Lage sind, Fehler und Risse an der Laufbahn bzw. an angrenzenden Bereichen der Lagerringe festzustellen. Bei einer bekannten Vorrichtung der eingangs bezeichneten Gattung (EP 0 529 354 B1) erfolgt die Erkennung und Überwachung von Schäden an den Laufbahnen od. dgl. mit Hilfe einer Messeinrichtung, die im Wälzkörperraum angeordnet ist und Sensoren aufweist, denen die Betriebsenergie berührungslos von außen her mit induktiven Mitteln zugeführt wird. Zu diesem Zweck ist im Walzkörperraum eine erste, als Energiequelle wirkende Spule angeordnet, die der Messeinrichtung die erforderliche elektrische Energie zuführt, während in einem der Lagerringe eine induktiv mit der ersten Spule gekoppelte, an ein äußeres Netz anschließbar Induktionsspule vorgesehen ist, die sich in einer zum Wälzkörperraum hin offenen Umfangsnut dieses Lagerrings befindet und über den gesamten Lagerumfang erstreckt. Dadurch wird erreicht, dass unabhängig von der momentanen Stellung der Lagerringe eine gleichmäßige Energieübertragung an die erste Spule möglich ist.

Als aufwendig und teuer wird bei derartigen Vorrichtungen allerdings empfunden, dass die zur Aufnahme der Induktionsspule bestimmte Umfangsnut in der meistens gehärteten, dem Wälzkörperraum zugewandten Fläche des betreffenden Lagerrings ausgebildet werden muß. Handelt es sich um Lager, die bei der Messung keine zwei kompletten Umdrehungen in der einen oder anderen Richtung zulassen, aber dennoch eine Überwachung der kompletten Lageringe erfordern, dann müssen mehrere Messeinrichtungen vorgesehen werden. Damit sich dadurch bei der Datenübertragung keine gegenseitigen Störungen ergeben, ist es zweckmäßig, eine der Zahl der Messeinrichtungen entsprechende Anzahl von Induktionsspulen und entsprechend viele Umfangsnuten vorzusehen, was den Aufwand und die Kosten vervielfacht. Abgesehen davon können aus Platzmangel meistens nur höchstens zwei Induktionsspulen untergebracht werden, wodurch sich Beschränkungen hinsichtlich der Messmoglichkeiten ergeben.

Der Erfindung liegt daher die Aufgabe zugrunde, die Vorrichtung der eingangs bezeichneten Gattung so auszubilden, dass sie weniger aufwendig herstellbar und damit kostengünstiger ist und keine Umfangsnuten erfordert.

Zur Lösung dieser Aufgabe dienen die kennzeichnenden Merkmale des Anspruchs 1.

Die Erfindung bringt den Vorteil mit sich, daß die zweite Spule nur über einen sehr kleinen Teil des Lagerumfangs mit der ihr zugeordneten, im Wälzkörperraum untergebrachten, ersten Spule induktiv gekoppelt sein braucht. Die während der induktiven Kopplung übertragene Energie kann in einem mit der ersten Spule verbundenen Energiespeicher gespeichert werden und reicht bei richtiger Dimensionierung aus, um die gewünschten Messungen durchzuführen. Analog dazu ist es möglich, die ermittelten Messdaten in einem Datenspeicher zwischeumpeichern und die Daten nur dann zu übertragen, wenn sich die beiden Spulen gegenüber stehen. Die gehärtete, dem Wälzkörperraum zugeordnete Fläche braucht daher nur im Bereich einer kleinen, die zweite Spule aufnehmenden Bohrung unterbrochen werden. Da die zusätzlich benötigten elektronischen Bauteile kostenmäßig nur wenig ins Gewicht fallen, ergibt sich insgesamt eine kostengünstige, flexibel anwendbare Überwachungsvorrichtung.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 einen schematischen Radialschnitt durch ein Wälzlager mit Teilen einer erfindungsgemäßen Vorrichtung;
Fig. 2 schematisch den Aufbau einer Messeinrichtung der Vorrichtung nach Fig. 1;
Fig. 3 in einem vergrößerten Teilquerschnitt durch das Wälzlager ein erstes Ausführungsbeispiel für die Unterbringung der Meßeinrichtung und einer zugehörigen Energiequelle der Vorrichtung nach Fig. 1;
Fig. 4 einen Längsschnitt durch eine mit einer Spule versehene Hülse der Vorrichtung nach Fig. 1;
Fig. 5 eine Stirnansicht der Hülse nach Fig. 4;
Fig. 6 schematisch ein Ausführungsbeispiel für einen elektrischen Schaltkreis der Energiequelle der Vorrichtung;
Fig. 7 in einem vergrößerten Teilquerschnitt durch das Wälzlager nach Fig. 1 ein zweites Ausführungsbeispiel für die Unterbringung der Messeinrichtung und einer zugehörigen Energiequelle der Vorrichtung; und
Fig. 8 einen schematischen Querschnitt durch das Wälzlager nach Fig. 1 und ein mehrere Messeinrichtungen aufweisendes Ausführungsbeispiel der erfindungsgemäßen Vorrichtung.

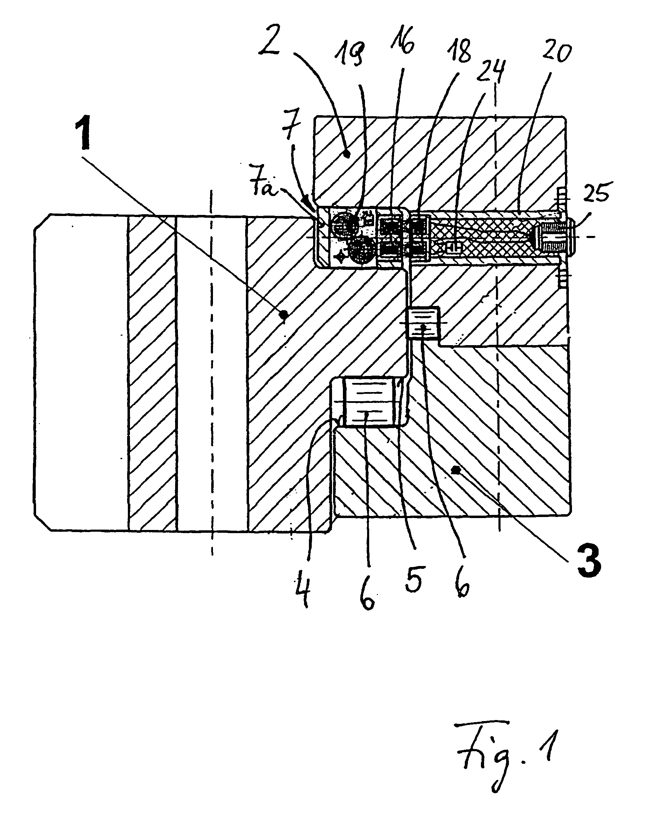

Das in Fig. 1 schematisch dargestellte Ausführungsbeispiel der erfindungsgemäßen Vorrichtung zeigt ein GroBwälzlager, das einen drehbaren Lagerring 1, einen stationären Tragring 2 und einen fest mit diesen verbundenen Haltering 3 aufweist, zwischen denen in drei Ebenen Wälzkörperräume vorgesehen sind. Diese werden von Laufbahnen 4, 5 für hier als Zylinderrollen ausgebildete Wälzkörper 6 begrenzt. Zur Führung und Separierung der Wälzkörper 6 sind in den Wälzkörperräumen außerdem, wie in Fig. 1 nur für die oberste Ebene dargestellt ist, Käfige 7 vorgesehen, die zwischen die Wälzkörper 6 greifende Stege 7a aufweisen. Die Laufbahnen 4 und 5 und an diese angrenzende Bereiche, insbesondere Übergänge zwischen den Laufbahnen 4, 5 und den Lagerringen, sind in der Regel mit einer Härteschicht versehen.

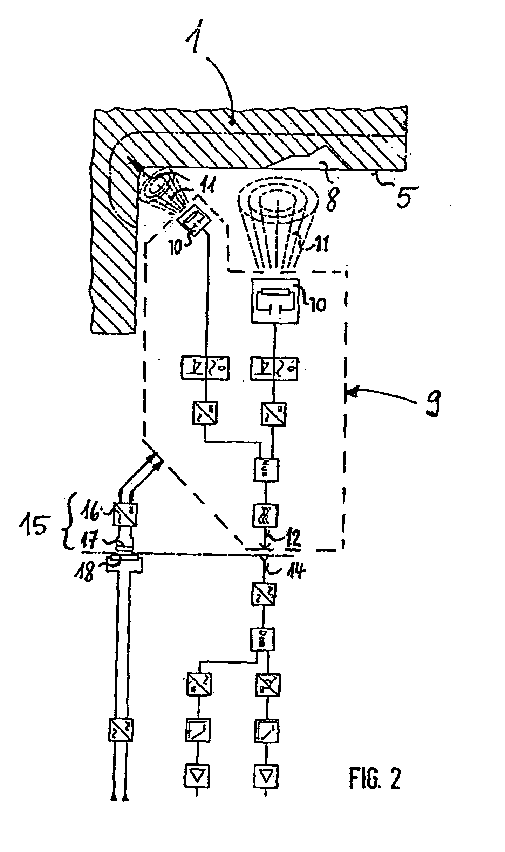

Zur Überwachung der Laufbahnen 4 und 5 und der angrenzenden Bereiche und zur Erkennung von in diesen sich bildenden Ausbrüchen und Rissen 8 (Fig. 2) ist in wenigstens einem der Wälzkörperräume, insbesondere in einem Steg 7a eines der Käfige 7, eine elektrische Messeinrichtung 9 untergebracht. Diese enthält wenigstens einen Sensor 10, der im Ausführungsbeispiel als Hochfrequenzspule ausgebildet ist, die gemäß Fig. 2 einer der Laufbahnen 4, 5 oder einem angrenzenden Bereich unter Bildung eines Luftspalts dicht gegenübersteht und ein hochfrequentes elektromagnetisches Wechselfeld 11 erzeugt, das in den aus Stahl bestehenden Laufbahnen 4, 5 und Übergängen Wirbelströme zur Folge hat. Die dadurch bewirkte Magnetkopplung hat eine von der Änderung des Luftspalts abhängige Dämpfung eines den Sensor 10 enthaltenden Schwingkreises der Messeinrichtung 9 zur Folge. Die daraus resultierende Amplitudenänderung bestimmt die Größe von Messsignalen.

Die Aufbereitung dieser Messsignale erfolgt in einer mit dem Sensor 10 verbundenen, elektrischen Schaltungsanordnung der Messeinrichtung 9, deren Komponenten je nach den aktuellen Platzverhältnissen in demselben oder einem benachbarten Steg des betreffenden Käfigs 7 untergebracht sind. Schließlich weist die Messeinrichtung 9 ein hier als Sendeantenne 12 ausgebildetes Mittel zur Übertragung der Messsignale nach außen auf, wo die Messsignale z. B. mittels einer im Tragring 2 unterbrachten Empfangsantenne 14 aufgenommen und der weiteren Verarbeitung und Auswertung zugeführt werden.

Die Betriebsenergie für die Sensoren 10 und die elektrischen bzw. elektronischen Komponenten der Messeinrichtung 9 wird von einer ebenfalls im betreffenden Wälzkörperraum angeordneten Energiequelle 15 bereitgestellt, die eine erste, am betreffenden Käfig 7 montierte Spule 16 und einen an diese angeschlossenen Gleichrichter 17 enthält. Die erste Spule 16 erstreckt sich nur über einen kleinen Teil des Lagerumfangs und ist induktiv mit einer zweiten Spule 18 gekopppelt, die außerhalb des betreffenden Wälzkörperraums, vorzugsweise im Tragring 2 angeordnet ist und dazu dient, die von der Messeinrichtung 9 benötigte elektrische Energie von außen induktiv auf die erste Spule 16 zu übertragen.

Vorrichtungen der beschriebenen Art sind u. a. aus der Schrift EP 0 529 354 B1 bekannt, die zur Vermeidung von Wiederholungen hiermit durch Referenz auf sie zum Gegenstand der vorliegenden Offenbarung gemacht wird.

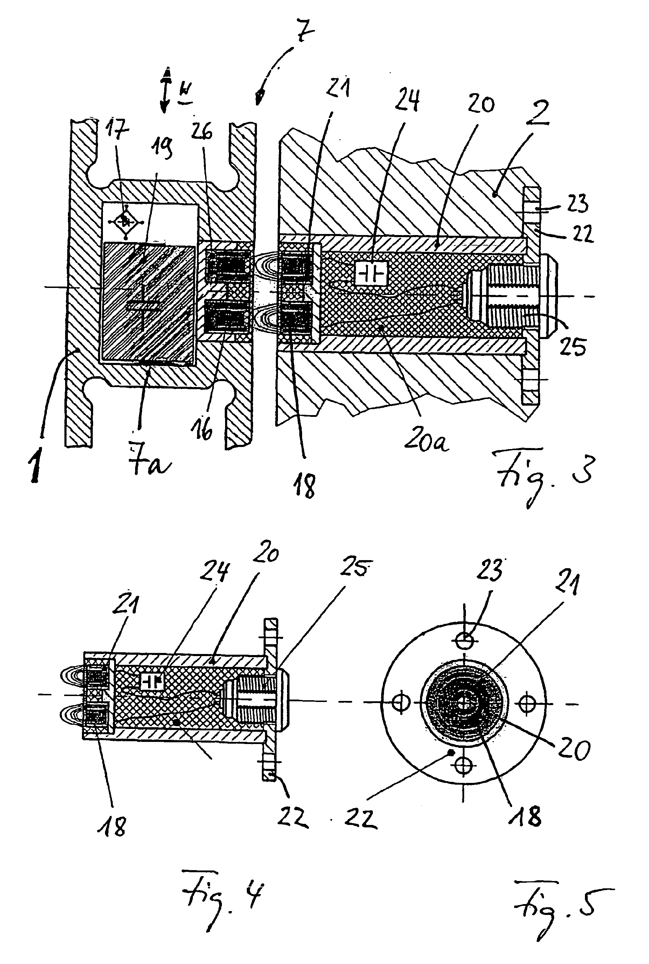

Die zweite Spule 18 erstreckt sich erfindungsgemäß ebenfalls nur über einen Teil, vorzugsweise einen sehr geringen, über wenige Wälzkörperteilungen ausgedehnten Teil des Lagerumfangs, wie insbesondere Fig. 3 zeigt. Daher kann beim Drehen des Lagerrings 1 in Richtung eine Doppelpfeils w (Fig. 3) immer nur dann von außen her elektrische Energie auf die erste Spule 16 übertragen werden, wenn die zweite Spule 18 der ersten Spule 16 entsprechend Fig. 3 so gegenüber steht, dass eine ausreichend starke magnetische Kopplung vorhanden ist. Um dennoch eine ausreichende Energieversorgung auch für diejenige Reiativstellungen der Lagerringe 1, 2 sicherzustellen, in denen die Spulen 16, 18 nicht induktiv gekoppelt sind, ist die Energiequelle 15 erfingdungsgemäß mit einem Energiespeicher 19 versehen, der in Fig. 3 nur schematisch angedeutet ist. Dieser Energiespeicher 19 enthält z. B. wenigtens einen hochkapazitiven Kondensator oder wenigstens einen Akkumulator. Dadurch wird erreicht, dass der Energiespeicher 19 immer dann aufgeladen wird, wenn sich die zweite Spule 18 der ersten Spule 16 annähert und/oder an dieser vorbeiläuft. Sollte die Zeit zur vollen Ladung des Energiespeichers beim Drehen des Lagers zu kurz sein, kann der Lagerring 1 auch kurzzeitig aufgehalten werden. Als Kondensatoren für diesen Zweck kommen z.B. solche in Frage, die unter den Bezeichnungen "Gold Cap." oder "Super Cap" im Handel sind und je nach Größe und Spannung über Kapazitäten von z. B. 1 F bis zu mehr als 100 F verfügen. Nur beispielhaft sei in desem Zusammenhang erwähnt, dass die Energiequelle 15 mit einem Kondensator von 11 F bei einem erlaubten Spannungsabfall von 0,8 V ca. 14 Minuten lang einen Strom von 10 mA an die Messeinrichtung 9 liefern kann.

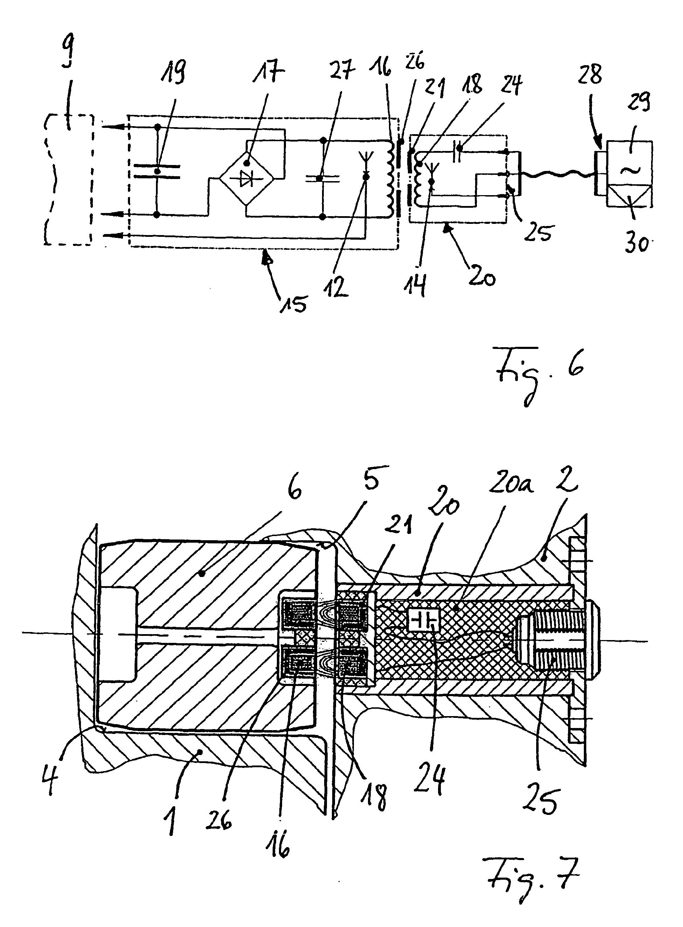

Gemäß Fig. 1, 3, 4 und 5 ist die zweite Spule 18 in einem Ende einer Hülse 20 befestigt und auf einen üblichen, z. B. topfförmig ausgebildeten Schalen- bzw. Ferritkern 21 od. dgl. montiert. Am entgegengesetzten Ende weist die Hülse 20 eine als Anschlag wirkende Flanschplatte 22 auf, die mit Schraublöchern 23 versehen ist, um sie z. B. an der Innenseite des Tragrings 2 befestigen zu können. Ferner kann in der Hülse 20 wenigstens ein mit der Spule 18 verbundener Ausgleichskondensator 24 vorgesehen sein. Schließlich ist die Flanschplatte 22 von einem stecker- und/oder dosenförmigen Kontaktsystem 25 durchragt, dessen Kontakte mit der Spule 18, dem Ausgleichskondensator 24 und ggf. weiteren Bauelementen verbunden sind. Gemäß Fig. 6 kann ein solches weiteres Bauelement die Empfangsantenne 14 sein, die ebenfalls in der Hülse 20 untergebracht und mit einem zugeordneten Kontakt des Kontaktsystems 25 verbunden ist. In diesem Fall wird die Sendeantenne 12 vorzugsweise in der Nähe der ersten Spule 16 angeordnet. Im übrigen kann die Hülse 20 mit einer Vergußmasse 20a gefüllt sein.

Fig. 6 zeigt schematisch den elektrischen Schaltkreis der Energiequelle 15 mit der ersten Spule 16, einem diese tragenden Ferritkern 26, dem Energiespeicher 19, dem zwischen diesen und und die Spule 16 geschalteten Gleichrichter 17 und einem Glättungskondensator 27. Die Anschlußkontakte des Energiespeichers 19 sind mit Eingängen der Messeinrichtung 9 verbunden. Dasselbe gilt für einen Anschlußkontakt der Sendeantenne 12. Außerdem ist aus Fig. 6 die zweite Spule 18 mit dem Ferritkern 21, dem Ausgleichskondensator 24, der Empfangsantenne 14 und dem an diese Bauelemente angeschlossenen Kontaktsystem 25 erkennbar. Es versteht sich, daß die Anordnung außerdem zweckmäßig derart ist, dass die Spule 18, wenn die Hülse 20 nach ihrer Einführung in die Bohrung des Tragrings 2 mit ihrer Flanschplatte 22 an diesem anliegt und automatisch die für die vorgesehene Energieübertragung richtige Position einnimmt.

Wie Fig. 6 weiter zeigt, ist es im Falle einer Überprüfung des Lagers auf die genannten Fehler lediglich erforderlich, ein Prüfgerät 28 an das Kontaktsystem 25 anzuschließen, das z. B. ein zum Anschluß an die zweite Spule 18 bestimmtes Netzteil 29 und eine an die Empfangsantenne 14 anzuschließende Datenverarbeitungsanlage 30 enthält, die auch ein PC oder Laptop sein kann. Mit dem Prüfgerät 28 wird dann einerseits der zweiten Spule 18 die im Einzelfall erforderliche Wechselspannung zugeführt, um mit Hilfe der ersten Spule 16 immer dann, wenn diese an der Hülse 20 vorbeiläuft, den Energiespeicher 19 über den Gleichrichter 17 aufzuladen. Dadurch wird sichergestellt, dass der Messeinrichtung 9 auch dann der erforderliche Gleichstrom zugeführt wird, wenn sich die beiden Spulen 16, 18 nicht einander gegenüber stehen. Gleichzeitig können mittels der Datenverarbeitungsanlage 30 die von der Sendeantenne 12 an die Empfangsantenne 14 gesendeten Messdaten aufgenommen und je nach Bedarf direkt ausgewertet oder zwecks späterer Auswertung in einen Datenspeicher der Datenverarbeitunganlage 30 geladen werden. Nach Beendigung der Überprüfung des Lagers wird das Prüfgerät 28 wieder vom Kontaktsystem getrennt. Denkbar wäre natürlich auch, das Prüfgerät 28 stationär am Lager zu belassen und mit einer Anschlussdose für das Anschlusskabel einer Spannungsquelle od. dgl. zu versehen.

Die Übertragung der Messdaten von der Sendeantenne 12 auf die Empfangsantenne 14 ist, wenn nicht eine Datenübertragung per Funk erfolgt, in der Regel ebenfalls nur möglich, wenn sich die beiden Antennen 12, 14 im wesentlichen genau gegenüber stehen. Daher ist in Weiterbildung der Erfindung vorgesehen, die Messeinrichtung 9 mit einem zusätzlichen Datenspeicher zu versehen, in dem die bei einer vollen (oder teilweisen) Umdrehung des Lagers ermittelten Messdaten zwischengespeichert werden. Immer dann, wenn die beiden Antennen 12, 14 aufeinander ausgerichtet sind, wird dann eine Übertragung der Messdaten an die Empfangsantenne 14 durchgeführt. Der Datenspeicher besteht aus einem Speicherchip, der auf einen Prozessor angepasst ist, der den internen Ablauf steuert und die Kommunikation aufbaut.

Anstatt einer Datenübertragung mittels Antennen kann auch vorgesehen werden, die Daten mit magnetisch gekoppelten, induktiven Elementen zu übertragen, wobei diese induktiven Elemente mit besonderem Vorteil auch dieselben Spulen 16 und 18 sein können, die der Energieübertragung dienen. Eine derartige Übertragung kann gleichzeitig oder zur besseren Trennung der Daten- von der Energieübertragung auch zeitlich nacheinander durchgeführt werden. Bei gleichzeitiger Übertragung werden z. B. Rückwirkungen gemessen, die sich aufgrund des Betriebs des Sensors 10 im Hinblick auf Amplitude, Phase oder Frequenz in den Strömen und/oder Spannungen der zweiten Spule 18 ergeben. Dagegen kann eine von der Energieübertragung unabhängige Datenübertragung beispielsweise dadurch erfolgen, dass in Drehrichtung des Lagerrings 1 vor oder hinter der ersten Spule 16 eine dritte Spule angeordnet ist, die allein der Datenübertragung dient und beim Vorbeigang an der zweiten Spule 18 die Daten auf diese überträgt. Umgekehrt könnte auch eine weitere zweite Spule 18 in der Weise vorhanden sein, damit mit derselben ersten Spule 16 zunächst eine Datenübertragung und dann eine Energieübertragung vorgenommen werden kann (oder umgekehrt), je nach dem, welche zweite Spule 18 gerade der ersten Spule 16 gegenüber steht. Auch in diesen Fällen werden die Daten in einem Datenspeicher der Messeinrichtung 9 zwischengespeichert, solange sich die betreffenden Spulen nicht gegenüberstehen.

Die beschriebenen Komponenten der Messeinrichtung 9 können im Prinzip auf beliebig viele, vorzugsweise nebeneinander liegende Käfige 7 verteilt sein, die zuweilen auch als bloße Zwischenstücke zwischen den Wälzkörpern 6 ausgebildet sind. In Abhängigkeit von den räumlichen Verhältnissen ist es außerdem möglich, einzelne Wälzkörper 6 zu entfernen, um dadurch Platz für die Komponenten der Messeinrichtung 9 zu schaffen. Beim Vorhandensein von Käfigen 7 aus Kunststoff kann es ferner zweckmäßig sein, einige dieser Käfige 7 und von diesen geführte Wälzkörper 6 zu entfernen und in den dadurch frei gewordenen Teil des Wälzkörperraums einen Käfig aus Stahl einzubauen. Hierdurch kann vermieden werden, dass sich beim Betrieb etwa ergebende Verformungen von Kunststoffkäfigen ungünstig auf die Messgenauigkeit auswirken.

Alternativ ist es weiterhin möglich, wenigtens einen der Wälzkörper 6 als Messrolle auszubilden. Hierzu werden die Energiequelle 15 mit der ersten Spule 16 und die an sie angeschlossene Messeinrichtung 9 mit dem Sensor 10 in einem der Wälzkörper 6 untergebracht. Das ist schematisch in Fig. 7 angedeutet, wonach die Spule 16 in einer dem Tragring 2 zugewandten Stirnfläche eines der Wälzkörpers 6 angeordnet ist und sich mit diesem drehen kann. Die Messeinrichtung 9 und die übrigen Teile der Energiequelle 15 werden, was nicht gezeigt ist, in demselben Wälzkörper 6 untergebracht. Eine Energie- und Datenübertragung findet immer dann statt, wenn die betreffenden Wälzkörper 6 der zweiten Spule 18 gegenüber stehen.

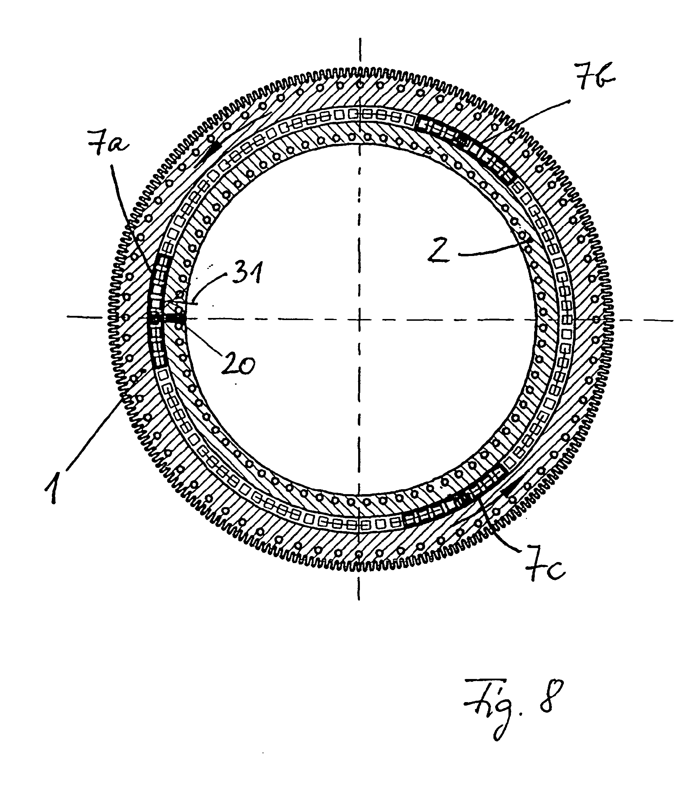

Fig. 8 zeigt ein Ausführungsbeispiel der Erfindung mit mehreren, in Umfangsrichtung des Lagers beabstandeten Käfigen 7a, 7b und 7c, in denen jeweils eine separate Energiequelle 15 und eine mit dieser verbundene Messeinrichtung 9 angeordnet sind. Da die Energie und die Daten wiederum nur an einer Stelle des Lagerumfangs übergeben werden, an der sich die Hülse 20 mit der zweiten Spule 18 befindet, können sich die verschiedenen Messeinrichtungen 9 nicht gegenseitig beeinflussen. Im Ausführungsbeispiel sind drei Käfige 7a, 7b und 7c dargestellt, die um ca. je 120° in Umfangsrichtung versetzt sind, doch können natürlich auch nur zwei oder mehr als drei Käfige 7 mit Energiequellen und Messeinrichtungen vorgesehen werden. Theoretisch könnte analog zu Fig. 7 auch in jedem einzelnen Wälzkörper 6 je eine separate Energiequelle 15 und Messeinrichtung 9 vorhanden sein.

Die Erfindung ist nicht auf die beschriebenen Ausführungsbeispiele beschränkt. Dies gilt insbesondere für die Zahl und die Anordnung der insgesamt vorhandenen ersten und zweiten Spulen 16, 18 und der mit diesen verbundenen Einrichtungen. Die Anwendung mehrerer, in Umfangsrichtung beabstandeter, sowohl erster als auch zweiter Spulen 16, 18 hätte z. B. den Vorteil, dass die Laufbahnen 4, 5 und angrenzenden Bereiche rundum überprüft werden könnten, ohne daß die Käfige 7 eine volle Umdrehung machen müssen. Weiter müssen die Antennen 12, 14 nicht in die Spule 16 oder die Hülse 20 integriert werden. Sie können vielmehr auch in einer weiteren Bohrung des Tragrings 2 plaziert werden, die ein paar Zentimeter nach der einen oder anderen Seite von der Hülse 20 beabstandet ist. Dies ist in Fig. 8 schematisch durch eine Linie 31 angedeutet. Auch hierdurch läßt sich eine saubere Trennung der Datenübertragung von der Energieübertragung erreichen. Außerdem sind die angegebenen Möglichkeiten der Datenübertragung nur als Beispiele aufzufassen, da es auch andere Möglichkeiten für eine berührungslose Datenübertragung gibt. Weiter ist klar, dass die Messeinrichtung 9 im Prinzip nur den Sensor (Hochfrequenzspule 10) und ein Mittel zur Übertragung der mit diesem erhaltenen Messsignale aufzuweisen braucht, da die komplette Aufbereitung und Auswertung der Messsignale auch mit einem an das Kontaktsystem 25 angeschlossenen Rechner od. dgl. vorgenommen werden könnte.

### Bezugszeichenliste

- 1: Lagerring
- 2: Lagering
- 3: Lagering
- 4: Laufbahn
- 5: Laufbahn
- 6: Wälzkörper (Zylinderrollen)
- 7: Käfig 7a, 7b, 7c
- 8: Risse
- 9: Meßeinrichtung
- 10: Sensor
- 11: Elektromagnetisches Wechselfeld
- 12: Sendeantenne
- 14: Empfangsantenne
- 15: Energiequelle
- 16: erste Spule
- 17: Gleichrichter
- 18: zweite Spule
- 19: Energiespeicher
- 20: Hülse
- 20a: Vergussmasse
- 21: Ferritkern
- 22: Flanschplatte
- 23: Schraubenlöcher
- 24: Ausgleichskondensator
- 25: Kontaktsystem
- 26: Ferritkern
- 27: Glättungskondensator
- 28: Prüfgerät
- 29: Netzteil
- 30: Datenverarbeitungsanlage
- 31: Linie
- w =: Doppelpfeil

## Patentansprüche

1. Vorrichtung zum Erkennen und Überwachen von Schäden an Laufbahnen oder angrenzenden Bereichen von Lagerringen (1, 2, 3) bei Wälzlagern mit einer im Wälzkörperraum angeordneten, elektrischen Messeinrichtung (9), die wenigstens einen zur Abgabe von Messsignalen bestimmten Sensor (10) und ein Mittel zur Lieferung von Messdaten nach außen aufweist, einer ebenfalls im Wälzkörperraum angeordneten, eine erste Spule (16) enthaltenden Energiequelle (15) zur Lieferung der von der Messeinrichtung (9) benötigten elektrischen Energie und einer außerhalb des Wälzkörperraums angeordneten, zur induktiven Übertragung von elektrischer Energie auf die erste Spule (16) bestimmten, zweiten Spule (18), **dadurch gekennzeichnet, dass** sich die zweite Spule (18) nur über einen Teil des Lagerumfangs erstreckt und die Energiequelle (15) einen zur Speicherung von elektrischer Energie bestimmten, mit der ersten Spule (16) verbundenen Energiespeicher (19) enthält.

2. Vorrichtung nach Anspruch 1, **dadurch gekennzeichnet, dass** die zweite Spule (18) in einer in eine Bohrung eines der Lagerringe (2) einführbaren Hülse (20) angeordnet ist.

3. Vorrichtung nach Anspruch 1 oder 2, **dadurch gekennzeichnet, dass** der Energiespeicher (19) einen Kondensator oder einen Akkumulator und einen zwischen den Energiespeicher (19) und die erste Spule (16) geschalteten Gleichrichter (17) enthält.

4. Vorrichtung nach einem der Ansprüche 1 bis 3, **dadurch gekennzeichnet, dass** die Messeinrichtung (9) in einem über mehrere Wälzkörperteilungen erstreckten Teil eines zur Führung und Trennung von Wälzkörpern (6) bestimmten Käfigs (7) untergebracht ist.

5. Vorrichtung nach Anspruch 4, **dadurch gekennzeichnet, dass** mehrere Messeinrichtungen (9) vorhanden sind, die in mehreren, am Lagerumfang verteilt angeordneten Käfigteilen (7a, 7b, 7c) des Käfigs untergebracht sind.

6. Vorrichtung nach einem der Ansprüche 1 bis 3, **dadurch gekennzeichnet, dass** die Messeinrichtung (9) und die Energiequelle (15) in einem als Messrolle ausgebildeten Wälzkörper (6) untergebracht sind.

7. Vorrichtung nach einem der Ansprüche 2 bis 6, **dadurch gekennzeichnet, dass** die Hülse (20) auf einer Umfangsfläche des sie aufnehmenden Lagerrings (2) mit einem zumindest zum Anschluss an eine Spannungsquelle bestimmten Kontaktsystem (25) versehen ist.

8. Vorrichtung nach einem der Ansprüche 1 bis 7, **dadurch gekennzeichnet, dass** die Messeinrichtung (9) einen Datenspeicher enthält.

9. Vorrichtung nach Anspruch 8, **dadurch gekennzeichnet, dass** das Mittel zur Lieferung der Messdaten nach außen miteinander gekoppelte induktive Elemente enthält.

10. Vorrichtung nach Anspruch 9, **dadurch gekennzeichnet, dass** die induktiven Elemente die erste Spule (16) und die zweite Spule (18) sind.

## Claims

1. A device for recognizing and monitoring damage to raceways or adjoining regions of bearing rings (1, 2, 3) in ball bearings, having an electric measuring unit (9) disposed in the ball bearing chamber, comprising at least one sensor (10) intended for the output of measurement signals, and means for delivering measurement data toward the exterior, an energy source (15) that is also disposed in the ball bearing chamber, containing a first coil (16), for supplying electric energy required by the measuring unit (9), and a second coil (18) that is disposed outside of the ball bearing chamber, intended for the inductive transfer of electric energy to the first coil (16), **characterized in that** the second coil (18) extends only across part of the bearing circumference, and the energy source (15) contains an energy storage (19) intended for storing electric energy, being connected to the first coil (16).

2. The device according to claim 1, **characterized in that** the second coil (18) is disposed in a bush (20) that may be inserted into a bore of one of the bearing rings (2).

3. The device according to claims 1 or 2, **characterized in that** the energy storage (19) comprises a capacitor or an accumulator, and a rectifier (17) that is interconnected between the energy storage (19) and the first coil (16).

4. The device according to one of the claims 1 to 3, **characterized in that** the measuring unit (9) is housed in a part of a cage (7) intended for the guiding and separating of ball bearings (6), which extends across multiple ball bearing partitions.

5. The device according to claim 4, **characterized in that** multiple measuring devices (9) are present, which are housed in multiple cage parts (7a, 7b, 7c) of the cage being disposed in a distributed manner at the bearing circumference.

6. The device according to one of the claims 1 to 3, **characterized in that** the measuring device (9) and the energy source (15) are housed in a ball bearing (6) embodied as a measuring roller.

7. The device according to one of the claims 2 to 6, **characterized in that** the bush (20) is equipped with a contact system (25) intended at least for the connection to a voltage source on a circumferential surface of the bearing ring (2) receiving the same.

8. The device according to one of the claims 1 to 7, **characterized in that** the measuring unit (9) comprises a data storage.

9. The device according to claim 8, **characterized in that** the means for supplying the measurement data comprises inductive elements that are coupled to each other toward the exterior.

10. The device according to claim 9, **characterized in that** the inductive elements are the first coil (16) and the second coil (18).

## Revendications

1. Dispositif de détection et de contrôle des dommages sur les voies de roulement ou les zones adjacentes des bagues (1, 2, 3) dans les paliers à roulement, comportant un dispositif de mesure (9) électrique, qui est disposé à l'intérieur du corps de roulement et qui comprend au moins un capteur (10) destiné à émettre des signaux de mesure et un moyen destiné à fournir des données de mesure vers l'extérieur, une source d'énergie (15), qui est disposée également à l'intérieur du corps de roulement et contient une première bobine (16) et qui est destinée à fournir l'énergie électrique nécessaire au dispositif de mesure (9), et une deuxième bobine (18), disposée en dehors du corps de roulement et destinée à la transmission inductive de l'énergie électrique vers la première bobine (16), **caractérisé en ce que** la deuxième bobine (18) s'étend seulement sur une partie de la périphérie du palier, et la source d'énergie (15) contient un réservoir d'énergie (19), destiné à stocker l'énergie électrique et relié à la première bobine (16).

2. Dispositif selon la revendication 1, **caractérisé en ce que** la deuxième bobine (18) est disposée dans un manchon (20), propre à être introduit dans une forure d'une des bagues (2) du palier.

3. Dispositif selon la revendication 1 ou 2, **caractérisé en ce que** le réservoir d'énergie (19) contient un condensateur ou un accumulateur et un redresseur (17) monté entre le réservoir d'énergie (19) et la première bobine (16).

4. Dispositif selon l'une quelconque des revendications 1 à 3, **caractérisé en ce que** le dispositif de mesure (9) est logé dans une partie, s'étendant sur plusieurs divisions du corps de roulement, d'une cage (7) destinée à guider et séparer les corps de roulement (6).

5. Dispositif selon la revendication 4, **caractérisé en ce qu'**il est prévu plusieurs dispositifs de mesure (9) qui sont logés dans plusieurs parties (7a, 7b, 7c) de la cage, réparties sur la périphérie du palier.

6. Dispositif selon l'une quelconque des revendications 1 à 3, **caractérisé en ce que** le dispositif de mesure (9) et la source d'énergie (15) sont logés dans un corps de roulement (6) réalisé sous forme de rouleau de mesure.

7. Dispositif selon l'une quelconque des revendications 2 à 6, **caractérisé en ce que** le manchon (20), sur une surface périphérique de la bague (2) le recevant, est muni d'un système de contact (25) destiné au moins au raccordement à une source d'énergie.

8. Dispositif selon l'une quelconque des revendications 1 à 7, **caractérisé en ce que** le dispositif de mesure (9) contient une mémoire de données.

9. Dispositif selon la revendication 8, **caractérisé en ce que** le moyen destiné à fournir les données de mesure vers l'extérieur contient des éléments inductifs couplés entre eux.

10. Dispositif selon la revendication 9, **caractérisé en ce que** les éléments inductifs sont la première bobine (16) et la deuxième bobine (18).
